# EUROPÄISCHE PATENTSCHRIFT

(11) **EP 1 926 568 B1**
(45) Veröffentlichungstag und Bekanntmachung des Hinweises auf die Patenterteilung: **14.11.2012**
(21) Anmeldenummer: 05787622.9
(22) Anmeldetag: 03.09.2005
(51) Int. Cl.: B23K 26/06

(54) **LASERBEARBEITUNGSMASCHINE MIT EINER OPTISCHEN BLENDE ZUR RANDFELDBESEITIGUNG**
LASER MACHINING MACHINE WITH OPTICAL SHUTTER FOR PREVENTION OF FRINGING
MACHINE D'USINAGE AU LASER POURVUE D'UN OBTURATEUR OPTIQUE POUR LA SUPPRESSION DES ZONES PERIPHERIQUES DE DIFFRACTION

(43) Veröffentlichungstag der Anmeldung: 04.06.2008
(73) Patentinhaber: TRUMPF Werkzeugmaschinen GmbH + Co. KG, 71254 Ditzingen (DE)
(72) Erfinder: GESCHWANDNER, Mark, 70825 Korntal-Münchingen (DE); HÄBERLE, Norbert, 70839 Gerlingen (DE)
(74) Vertreter: Kohler Schmid Möbus
(86) Internationale Anmeldenummer: PCT/EP2005/009498
(87) Internationale Veröffentlichungsnummer: WO 2007/025562

(56) Entgegenhaltungen:
- EP-A- 1 180 409
- US-A- 5 237 149
- US-A- 5 670 069
- US-B1- 6 285 002

## Beschreibung

Die vorliegende Erfindung betrifft eine Laserbearbeitungsmaschine, insbesondere eine Laserschneidmaschine oder Laserschweißmaschine, mit einer Fokussieroptik, die den Laserstrahl innerhalb eines Strahlführungsraums zwischenfokussiert, und mit einer im Bereich des Zwischenfokus angeordneten optischen Blende (Raumblende) zur Strahlformung des Laserstrahls.

Eine derartige Laserbearbeitungsmaschine ist beispielsweise durch die EP-A-1 180 409 und die US-A-5 670 069 bekannt geworden.

Bei der Materialbearbeitung mittels Laser, beispielsweise beim Laserschneiden oder -schweißen, ist das Bearbeitungsergebnis von der Leistungsdichte und Strahlqualität des Laserstrahls abhängig. Häufig ist es notwendig, den Laserstrahldurchrnesser am Bearbeitungsort genau einzustellen, um das gewünschte Bearbeitungsergebnis zu erhalten. Ein Laserstrahl enthält neben dem Lasermode auch Beugungsstrukturen (Beugungsanteile) mit größerem Strahldurchmesser und größerer Femfelddivergenz als der Lasermode. Wenn der Laserstrahl auf ein zu bearbeitendes Werkstück gebündelt wird, liegen diese Beugungsstrukturen außerhalb des Strahldurchmessers des Lasermodes und führen zu einer unerwünschten Aufheizung des Werkstücks außerhalb des Bearbeitungsorts, was zu verminderter Schneid- bzw. Schweißqualität, wie z.B. zu rauhen Schnittkanten, Auswaschungen, Verzunderungen und kleinen Arbeitsbandbreiten, führt. Beim Sauerstoff(O₂)-Laserschneiden wird zudem die maximal schneidbare Materialstärke deutlich herabgesetzt.

An bekannten Laserbearbeitungsmaschinen sind daher optische Blenden zur Strahlformung, insbesondere zum Herausfiltern von Beugungsstrukturen, vorgesehen. So ist aus der eingangs genannten EP-A-1 180 409 die Beseitigung von Beugungsstrukturen (Randfeldem) und Lasermoden höherer Ordnung in einem zwischenfokussierten Laserstrahl durch eine optische Blende bekannt, die im Zwischenfokus angeordnet ist. Die Blendenöffnung ist dabei so klein gewählt, dass im gasgespülten Strahlführungsraum vor der optischen Blende ein deutlich höherer Druck (Überdruck) als hinter der optischen Blende herrscht. Die Blendenöffnung wirkt also gleichzeitig als Drosselstelle für das durch den Strahlführungsraum strömende Spülgas, um dessen hindurchströmende Gasmenge zu reduzieren. Je kleiner die Blendenöffnung ist, desto höher sind allerdings auch die Intensitätsverluste des Lasermode.

Demgegenüber ist es die Aufgabe der vorliegenden Erfindung, bei einer Laserbearbeitungsmaschine der eingangs genannten Art störende Beugungsstrukturen (Randfelder) zu beseitigen, ohne dass dabei Intensitätsverluste am Lasermode auftreten.

Diese Aufgabe wird erfindungsgemäß dadurch gelöst, dass der Blendenöffnungsdurchmesser 2,5 mal größer als der 99%-Strahldurchmesser des zwischenfokussierten Laserstrahls ist. Der 99%-Strahldurchmesser ist als der Strahldurchmesser definiert, bei dem die Maximalintensität I(0) in der Laserstrahlmitte auf 1 % abgefallen ist.

Versuche an einer erfindungsgemäß ausgebildeten Sauerstoff(O₂)-Laserschneidmaschine haben zu deutlich glatteren Schnittkanten ohne Verzunderungen geführt. Diese verbesserte Schneidqualität wird darauf zurückgeführt, dass im Laserstrahl vorhandene Beugungsstrukturen, die am Bearbeitungsort zu einer Aufheizung des Werkstücks außerhalb des Bearbeitungsorts führen, durch die optische Blende beseitigt werden.

Die Wahl der Brennweite der Fokussieroptik ist nach "oben" durch die maximalen geometrischen Abmessungen der Laserbearbeitungsmaschine und nach "unten" durch die thermische bzw. mechanische Stabilität im kW-Laserbereich und die Justierbarkeit der optischen Blende begrenzt. Blendendurchmesser kleiner 1 mm sind im Multi-kW-Bereich nicht praktikabel. Der Zwischenfokus ist vorzugsweise zwischen einem Auskoppelfenster eines Laserresonators und einem Umlenkspiegel des Strahlführungsraums, insbesondere dem ersten Umlenkspiegel, angeordnet.

Die optische Blende braucht nicht exakt im Zwischenfokus, d.h. in der Strahltaille des zwischenfokussierten Laserstrahls, angeordnet zu sein, sondern kann vom Zwischenfokus maximal um die Rayleighlänge entfernt angeordnet sein. In diesem Bereich um die Strahltaille ist die Fresnelzahl gleich bzw. ungefähr Null und daher die räumliche Trennung zwischen Lasermode und Beugungsstrukturen am größten, so dass hier die Beugungsstrukturen herausgefiltert werden können und die Verluste beim Lasermode am geringsten sind.

Im Strahlengang werden bevorzugt Elemente eingesetzt, die keinen Fokusshift bewirken. Aus diesem Grund sind die Fokussieroptik und ein Laserbearbeitungskopf der Laserbearbeitungsmaschine eine nicht-transmissive Optik oder aber eine transmissive Optik, deren thermischer Linseneffekt kleiner als bei ZnSe-Optiken ist. Transmissive Optiken (z.B. ZnSe-Linsen) verändern ihren Brechungsindex in Abhängigkeit von der transmittierten Laserleistung durch Absorption der Laserstrahlung und Ausbildung eines Temperaturgradienten, so dass sich eine so genannte thermische Linse bildet. Dieser Linseneffekt führt zu einem Wandern des Fokuspunktes entlang der Ausbreitungsrichtung im Bereich des Zwischenfokus und zu einem störenden leistungsabhängigen Fokusshift am Bearbeitungsort (Schneidkopf, Schweißkopf, usw.). Für eine optimale Funktionalität der optischen Blende und einen geringen Fokusshift am Bearbeitungsort sind transmissive Optiken mit einem geringen Linseneffekt (z.B. Diamant-Auskoppelfenster) oder nicht-transmissive Optiken (z.B. Bearbeitungskopf mit Spiegeloptik) zu wählen. ZnSe-Linsen an diesen Positionen sind zwar auch möglich, haben jedoch die oben genannten Nachteile.

Die Fokussieroptik kann beispielsweise ein im Strahlführungsraum angeordneter externer Spiegel oder eine Deltafaltung sein oder, was bevorzugt ist, in das Auskoppelfenster integriert sein.

Vorzugsweise ist der Strahlführungsraum gasgespült, wobei vorteilhaft die vor und hinter der optischen Blende herrschenden Gasdrücke gleich oder nahezu gleich sind.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: schematisch den Strahlengang des Laserstrahls in der erfindungsgemäßen Laserbearbeitungsmaschine; und
- Fig. 2: das über den Strahlradius aufgetragene Intensitätsprofil des in Fig. 1 gezeigten Laserstrahls in einem Zwischenfokus.

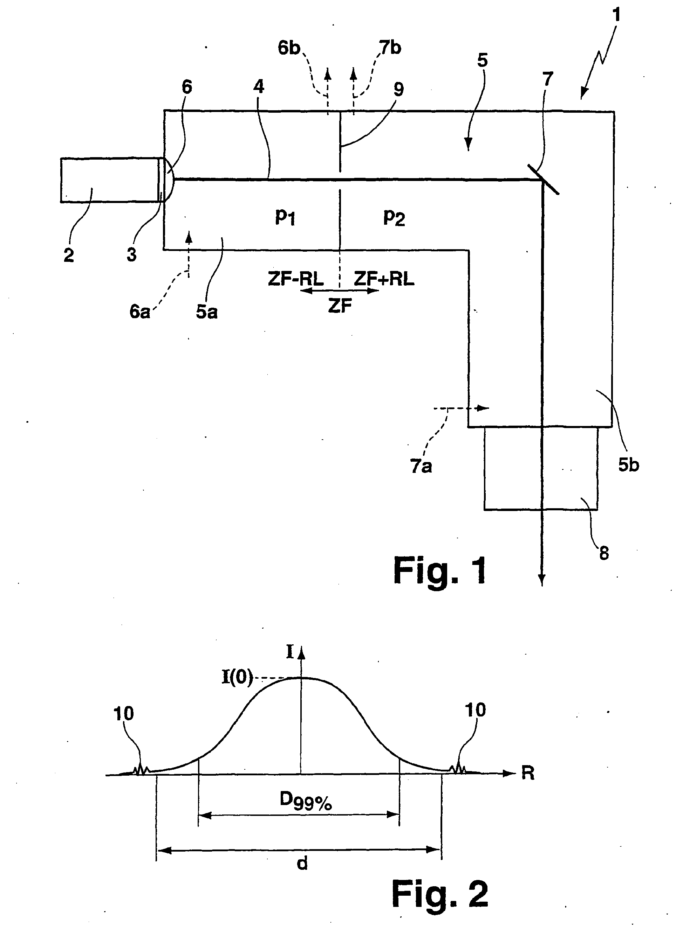

Die in Fig. 1 gezeigte CO₂-Laserbearbeitungsmaschine 1 umfasst einen CO₂-Lasergenerator 2 mit einem Auskoppelfenster (Auskoppelspiegel) 3, durch das ein Laserstrahl 4 in einen gasgespülten Strahlführungsraum 5 ausgekoppelt wird. In das Auskoppelfenster 3 ist eine Fokussieroptik 6 integriert, die den Laserstrahl 4 im Strahlführungsraum 5 auf einen Zwischenfokus ZF zwischenfokussiert. Die Position des Zwischenfokus ZF ist beliebig, jedoch ist es sinnvoll, einen fixen Abstand zwischen zwei optischen Elementen, im gezeigten Ausführungsbeispiel zwischen dem Auskoppelfenster 3 und einem Umlenkspiegel 7, zu wählen. Der am Umlenkspiegel 7 und ggf. noch an weiteren Elementen umgelenkte Laserstrahl 4 wird über einen Laserbearbeitungskopf 8 auf ein zu bearbeitendes Werkstück (nicht gezeigt) fokussiert. Die Laserbearbeitungsmaschine 1 kann beispielsweise eine Laserscheidmaschine oder Laserschweißmaschine sein.

Zur Strahlformung des Laserstrahls 4 ist im Zwischenfokus ZF eine wassergekühlte optische Blende (Raumblende) 9 mit kreisförmiger Blendenöffnung angeordnet. Wie die in Fig. 2 über den Strahlradius R aufgetragene Intensität I zeigt, ist der Blendenöffnungsdurchmesser d deutlich größer als der 99%-Strahldurchmesser D_{99%} des Laserstrahls 4 im Zwischenfokus ZF. Das Verhältnis d/D_{99%} sollte erfindungsgemäß bei 2,5 liegen. Es beträgt jedoch im gezeigten Ausführungsbeispiel ca. 1,4, so daß dieses Beispiel nicht unter dem Wortlaut der Ansprüche fällt. Bei einem kreissymmetrischen 99%-Strahldurchmesser D_{99%} von z.B. 6 mm liegt der zu wählende Blendenöffnungsdurchmesser d bei 15,0 mm. Die optische Blende 9 braucht nicht exakt im Zwischenfokus ZF, d.h. in der Strahltaille des zwischenfokussierten Laserstrahls 4, angeordnet zu sein, sondern kann vom Zwischenfokus ZF maximal um die Rayleighlänge RL entfernt angeordnet sein. Für eine gute Servicefreundlichkeit und eine leichte Positionseinstellung der optischen Blende 9 liegt der Zwischenfokus ZF, und damit die optische Blende 9, idealerweise ca. 1m bis 2m von der Fokussieroptik 6 entfernt.

Versuche an einer derart ausgebildeten Laserschneidmaschine mit Sauerstoff (O₂) als Schneidgas haben zu deutlich glatteren Schnittkanten ohne Verzunderungen geführt. Diese verbesserte Schneidqualität wird darauf zurückgeführt, dass im Laserstrahl 3 enthaltene Beugungsstrukturen 10, die am Bearbeitungsort zu einer Aufheizung des Werkstücks außerhalb des Bearbeitungsorts führen, durch die optische Blende 9 beseitigt werden.

Für eine optimale Funktionalität der optischen Blende 9 und einen geringen Fokusshift am Bearbeitungsort ist das Auskoppelfenster 3 samt integrierter Fokussieroptik 6 aus Diamant und der Laserbearbeitungskopf 8 ein Spiegelschneidkopf.

Der durch die optische Blende 9 in zwei Teilräume 5a, 5b unterteilte Strahlführungsraum 5 wird mit einem Spülgas gespült, um das Eindringen von Partikeln oder Gasen von außen in den Strahlführungsraum 5 zu verhindern. Das Spülgas wird in den vorderen Teilraum 5a nahe dem Auskoppelfenster 3 eingeleitet (Strömungspfeil 6a) und vor der optischen Blende 9 über ein Überdruckventil (nicht gezeigt) wieder ausgeleitet (Strömungspfeil 6b). Analog wird das Spülgas in den hinteren Teilraum 5b nahe dem Laserbearbeitungskopf 8 eingeleitet (Strömungspfeil 7a) und hinter der optischen Blende 9 über ein Überdruckventil (nicht gezeigt) wieder ausgeleitet (Strömungspfeil 7b). Die beiden Überdruckventile sind auf den gleichen Öffnungsdruck eingestellt, so dass die im gasgespülten Strahlführungsraum 5 vor und hinter der optischen Blende 9 herrschenden Gasdrücke p₁, p₂ gleich oder nahezu gleich sind und die optische Blende 9 ohne Drosselwirkung für das im Strahlführungsraum 5 vorhandene Spülgas ist. Zusätzlich kann die optische Blende 9 weitere Durchgangsöffnungen ausweisen, über die ebenfalls ein Druckausgleich zwischen den beiden Teilräumen 5a, 5b stattfinden kann.

## Patentansprüche

1. Laserbearbeitungsmaschine (1), insbesondere Laserschneidmaschine oder Laserschweißmaschine, mit einem Lasergenerator, der im Betrieb einen Laserstrahl (4) zur Bearbeitung von Werkstücken erzeugt, und
mit einer Fokussieroptik (6), die den Laserstrahl (4) innerhalb eines Strahlführungsraums (5) zwischenfokussiert, und einer im Bereich des Zwischenfokus (ZF) angeordneten optischen Blende (9) zur Strahlformung des Laserstrahls (4),
**dadurch gekennzeichnet,**
**dass** der Blendenöffnungsdurchmesser (d) das 2,5-fache des 99%-Strahldurchmessers (D_{99%}) des zwischenfokussierten Laserstrahls (4) beträgt.

2. Laserbearbeitungsmaschine nach Anspruch 1, **dadurch gekennzeichnet, dass** der Zwischenfokus (ZF) zwischen einem Auskoppelfenster (3) eines Laserresonators (2) und einem Umlenkspiegel des Strahlführungstaums (5), insbesondere dem ersten Umlenkspiegel (7), angeordnet ist.

3. Laserbearbeitungsmaschine nach Anspruch 1 oder 2, **dadurch gekennzeichnet, dass** die optische Blende (9) vom Zwischenfokus (ZF) des zwischenfokussierten Laserstrahls (4) maximal um die Rayleighlänge (RL) entfernt angeordnet ist.

4. Laserbearbeitungsmaschine nach einem der vorhergehenden Ansprüche, **dadurch gekennzeichnet, dass** die Fokussieroptik (6) und/oder ein Laserbearbeitungskopf (8) der Laserbearbeitungsmaschine (1) eine nicht-transmissive Optik ist.

5. Laserbearbeitungsmaschine nach einem der vorhergehenden Ansprüche, **dadurch gekennzeichnet, dass** die Fokussieroptik (6) und/oder ein Auskoppelfenster (3) eines Laserresonators (2) und/oder ein Laserbearbeitungskopf (8) der Laserbearbeitungsmaschine (1) eine transmissive Optik ist, deren thermischer Linseneffekt kleiner als bei ZnSe-Optiken ist.

6. Laserbearbeitungsmaschine nach einem der vorhergehenden Ansprüche, **dadurch gekennzeichnet, dass** die Fokussieroptik (6) in das Auskoppelfenster (3) integriert ist.

7. Laserbearbeitungsmaschine nach einem der Ansprüche 1 bis 5, **dadurch gekennzeichnet, dass** die Fokussieroptik (6) ein im Strahlführungsraum (5) angeordneter externer Spiegel ist.

8. Laserbearbeitungsmaschine nach einem der vorhergehenden Ansprüche, **dadurch gekennzeichnet, dass** der Strahlführungsraum (5) gasgespült ist.

9. Laserbearbeitungsmaschine nach Anspruch 8, **dadurch gekennzeichnet, dass** die im gasgespülten Strahlführungsraum (5) vor und hinter der optischen Blende (9) herrschenden Gasdrücke (p₁, p₂) gleich oder nahezu gleich sind.

## Claims

1. A laser processing machine (1), in particular a laser cutting machine or laser welding machine, comprising
a laser generator which, during operation, generates a laser beam (4) for processing workpieces,
a focusing optics (6) which intermediately focuses the laser beam (4) inside a beam guiding cavity (5), and
an optical diaphragm (9) disposed in the area of the intermediate focus (ZF) for forming the laser beam (4),
**characterised in that** the diaphragm aperture diameter (d) is the 2.5-times of the 99% beam diameter (D_{99%}) of the intermediately focused laser beam (4).

2. The laser processing machine according to claim 1, **characterised in that** the intermediate focus (ZF) is located between a coupling-out window (3) of a laser resonator (2) and a deflecting mirror of the beam guiding cavity (5), in particular the first deflecting mirror (7).

3. The laser processing machine according to claim 1 or 2, **characterised in that** the optical diaphragm (9) is located away from the intermediate focus (ZF) of the intermediately focused laser beam (4) maximally by the Rayleigh length (RL).

4. The laser processing machine according to any one of the preceding claims, **characterised in that** the focusing optics (6) and/or a laser processing head (8) of the laser processing machine (1) are non-transmitting optics.

5. The laser processing machine according to any one of the preceding claims, **characterised in that** the focusing optics (6) and/or a coupling-out window (3) of a laser resonator (2) and/or a laser processing head (8) of the laser processing machine (1) are transmitting optics whose thermal lens effect is smaller than that for ZnSe optics.

6. The laser processing machine according to any one of the preceding claims, **characterised in that** the focusing optics (6) is integrated in the coupling-out window (3).

7. The laser processing machine according to any one of the claims 1 to 5, **characterised in that** the focusing optics (6) is an external mirror located in the beam guiding cavity (5).

8. The laser processing machine according to any one of the preceding claims, **characterised in that** the beam guiding cavity (5) is flushed with gas.

9. The laser processing machine according to claim 8, **characterised in that** the gas pressures (p₁, p₂) prevailing before and after the optical diaphragm (9) in the gas-flushed beam guiding cavity (5) are the same or approximately the same.

## Revendications

1. Machine d'usinage au laser (1), en particulier machine à couper au laser ou machine à souder au laser, avec un générateur laser qui génère en fonctionnement un faisceau laser (4) servant à usiner des pièces et
avec une optique de focalisation (6) qui réalise une focalisation intermédiaire du faisceau laser (4) à l'intérieur d'une chambre de guidage de faisceau (5), et avec un obturateur optique (9) disposé au voisinage du foyer intermédiaire (ZF) pour mettre en forme le faisceau laser (4),
**caractérisé en ce**
**que** le diamètre d'ouverture de l'obturateur (d) est 2,5 fois plus grand que le diamètre de faisceau à 99% (D_{99%}) du faisceau laser (4) à focalisation intermédiaire.

2. Machine d'usinage au laser selon la revendication 1, **caractérisée en ce que** le foyer intermédiaire (ZF) est disposé entre une fenêtre de sortie (3) d'un résonateur laser (2) et un miroir de renvoi de la chambre de guidage de faisceau (5), en particulier le premier miroir de renvoi (7).

3. Machine d'usinage au laser selon la revendication 1 ou 2, **caractérisée en ce que** l'obturateur optique (9) est distant du foyer intermédiaire (ZF) du faisceau laser (4) à focalisation intermédiaire au maximum de la longueur de Rayleigh (RL).

4. Machine d'usinage au laser selon une des revendications précédentes, **caractérisée en ce que** l'optique de focalisation (6) et/ou une tête d'usinage au laser (8) de la machine d'usinage au laser (1) est une optique non transmissive.

5. Machine d'usinage au laser selon une des revendications précédentes, **caractérisée en ce que** l'optique de focalisation (6) et/ou une fenêtre de sortie (3) d'un résonateur laser (2) et/ou une tête d'usinage au laser (8) de la machine d'usinage au laser (1) est une optique transmissive dont l'effet de lentille thermique est plus petit que dans le cas des optiques en ZnSe.

6. Machine d'usinage au laser selon une des revendications précédentes, **caractérisée en ce que** l'optique de focalisation (6) est intégrée dans la fenêtre de sortie (3).

7. Machine d'usinage au laser selon une des revendications 1 à 5, **caractérisée en ce que** l'optique de focalisation (6) est un miroir externe disposé dans la chambre de guidage de faisceau (5).

8. Machine d'usinage au laser selon une des revendications précédentes, **caractérisée en ce que** la chambre de guidage de faisceau (5) est balayée par gaz.

9. Machine d'usinage au laser selon la revendication 8, **caractérisée en ce que** les pressions de gaz (p₁, p₂) qui règnent devant et derrière l'obturateur optique (9) dans la chambre de guidage de faisceau (5) balayée par gaz sont égales ou à peu près égales.
